# EUROPEAN PATENT SPECIFICATION

(11) **EP 1 609 264 B1**
(45) Date of publication and mention of the grant of the patent: **02.05.2007**
(21) Application number: 03709848.0
(22) Date of filing: 18.03.2003
(51) Int. Cl.: H04L 1/00, H04L 1/06, H04N 7/16

(54) **METHOD, SYSTEM AND NETWORK ENTITY FOR DATA TRANSMISSION AND RECEPTION WITH HEADER PROTECTION**
VERFAHREN, SYSTEM UND NETZWERKEINHEIT FÜR DATENÜBERTRAGUNG UND EMPFANG MIT HEADERSCHUTZ
PROCEDE, SYSTEME ET ENTITE RESEAU A PROTECTION D'EN-TETES POUR TRANSMISSION ET RECEPTION DE DONNEES

(43) Date of publication of application: 28.12.2005
(73) Proprietor: Nokia Corporation, 02150 Espoo (FI)
(72) Inventor: KÄRKÄS, Pasi, A., FIN-02660 Espoo (FI); ALAMAUNU, Jyrki, FIN-20720 Turku (FI); SUOMINEN, Rami, FIN-20500 Turku (FI); TOMBERG, Juha, FIN-20540 Turku (FI); PEKONEN, Harri, FIN-21260 Raisio (FI)
(74) Representative: Svensson, Johan Henrik
(86) International application number: PCT/FI2003/000208
(87) International publication number: WO 2004/084475

(56) References cited:
- WO-A2-01/86905
- US-A1- 2003 050 015

## Description

### TECHNICAL FIELD OF INVENTION

This invention relates to systems, methods, and network entities for data transmission and reception over a communication link.

### BACKGROUND INFORMATION

Services used in mobile handheld terminals require relatively low bandwidth. The estimated maximum bitrate for streaming video using advanced compression like MPEG-4 is in the order of few hundred kilobits per second, one practical limit being 384 kbps coming from the 3G environment. Some other types of services, as file downloading, may require significantly higher bandwidth, though. Therefore we have requirement for flexibility.

Broadcast has an almost century long tradition in radio. Even with TV, the history goes back to 1930's. Broadcasting has been successful throughout the world in bringing both entertainment and information to mass audiences.

The latest step in broadcasting is the digitalization of both radio and TV. Digital radio has not gained much acceptance on the market. However, many hope that digital TV will bring new benefits and services to the consumer and, as a result, generate new revenue streams for the broadcasting industry. The basic concept of the TV service itself has, however, not changed much. Rather, the TV lives on as before even if it has become digital.

The data is formatted by using, for example, a multi-protocol encapsulator in accordance with Section 7 of European Standard EN 301 192 "Digital Video Broadcasting (DVB); DVB specification for data broadcasting." Encapsulated data is sent by the multi-protocol encapsulator to a digital broadcast transmitter for broadcast to the digital broadcast receiver a signal.

It is noted that further information regarding DVB may be found, for example, in the following ETSI (European Telecommunications Standards Institute) document, each of which is incorporated herein by reference:
ETSI EN 300 468 "Digital Video Broadcasting (DVB); Specification for Service Information (SI) in DVB systems"
Latest appliances of broadcast have raised a need for power consumption consideration in the receiver, and some efforts for reducing power consumption in the receiver have been made. However, this has for one's part created new challenges for power conserving broadcast transmission/reception: the air interface. Because of the need for power conservation, which is particularly relevant for mobile environment, the air interface is more challenging than in traditional broadcasting.

One solution has been to introduce data error corrections to the reception. However, the mere correction of data is not enough, leaving too much responsibility for the mere correction, for the performance of the data correction method and for the performance of the receiver device. For example, a single bit error can drop out a lot of data from the reception, which leaves too much correction work for the data correction method of the receiver device.

Publication WO O1/86905 discloses such a basic broadcast packet structure wherein the successive data packets comprise, beside the common header, a sequential list of fields containing a description of the data, and a field containing a portion of the data.

In view of various inherent limitations of broadcasting, it would be desirable to avoid or mitigate these and other problems associated with prior art systems. Thus, there is a need for focusing the error correction for characterising portions of the mobile digital broadband transmission.

### SUMMARY OF THE INVENTION

Now a method and arrangement have been invented to a header protection mechanism for mobile digital broadband transmission.

In accordance with an aspect of the invention there is provided a method for data transmission, comprising:
placing a data segment into a two-dimensional data structure having first directional arrangements and second directional arrangements, wherein said first directional arrangements are perpendicular to said second directional arrangements, and wherein placement is with respect to said first directional arrangements;
adding to at least a portion of a header of said data segment a data structure placement indication;
providing a data protection encoding for at least part the header of said data segment;
adding said data protection encoding to said data segment; and
transmitting said data segment.

In accordance with a further aspect of the invention there is provided a method for data reception, comprising:
receiving one or more data segments;
identifying a header in each of the one or more received data segments;
identifying a data protection encoding in each header of said data segments;
checking each of said headers for errors based on said data protection encoding; and wherein said header is free from errors;
placing the received data segment associated with the error-free header into a two-dimensional data structure having first directional arrangements and second directional arrangements, wherein said first directional arrangements are perpendicular to said second directional arrangements, and wherein placement is in compliance with received data structure placement indications in the received header.

In accordance with yet further aspect of the invention, there is provided a system according to claim 14.

In accordance with yet further aspect of the invention, there is provided a receiver, comprising:
means for receiving one or more data segments;
means for identifying at least a header in at least one of the one or more received data segments;
means for identifying a data protection encoding in at least one header of said data segments;
means for checking at least a portion of at least the header for errors based on said data protection encoding; and
wherein said header is free from errors;
means for placing the received data segment associated with the error-free header into a two-dimensional data structure having first directional arrangements and second directional arrangements, wherein said first directional arrangements are perpendicular to said second directional arrangements, and wherein placement is in compliance with received data structure placement indications in the received header.

In accordance with another further aspect of the invention, there is provided a transmitter according to claim 16.

In some embodiments, there is provided a method and a system for transmission/reception, a transmitting node and a recipient node for a digital broadband transmission containing at least one data segment transmitted in a time division manner. A data protection encoding is provided for a header of a packet of said digital broadband transmission together with a higher level data protection encoding of several packets.

Embodiments of the invention are employed for digital broadband transmission based on bursts of data segments or packets for mobile environment.

Advantageously, the header can be protected separately, so that the header can be identified, analysed, and verified for data errors separately from another parts of the digital broadband transmission. The resources in respect to the higher level encoding for bigger data entities than those defined by the header is saved.

For better understanding of the present invention reference is made to the following description, taken in conjunction with the accompanying drawings, and its scope will be pointed out in the appending claims.

### BRIEF DESCRIPTION OF THE DRAWINGS

The invention will now be described, by way of example only, with reference to the accompanying drawings, in which:
- Figure 1: depicts an example of an array with time slicing and high level FEC system in which principles of embodiments of the invention can be applied,
- Figure 2: depicts a further example of the array with CRC-32 data error correction in which principles of embodiments of the invention can be applied,
- Figure 3: depicts an array with a header protection with another CRC in accordance with embodiments of the invention,
- Figure 4: shows how error detection/correction code is added at the end of MPE section header in accordance with further embodiments of the invention,
- Figure 5: depicts a diagram of exemplary steps involved in data transmission according to embodiments of the invention,
- Figure 6: depicts a diagram of exemplary steps involved in data reception according to embodiments of the invention,
- Figure 7: depicts a general architecture of the system where principles of embodiments of the invention can be applied,
- Figure 8: depicts a functional block diagram of an exemplary node in embodiments of the invention.

### DETAILED DESCRIPTION OF THE EMBODIMENTS

Digital Video Broadcasting (DVB) offers a high bandwidth broadband transmission channel wherein delivery is typically broadcast, multicast or alternatively unicast. The high bandwidth transmission channel can offer a user of such system various services. Appropriate data corrected to correctly received is important for obtaining the various services. DVB offers applicable principles, and preferably, a Terrestrial Digital Video Broadcasting (DVB-T) is applied in the embodied invention. Alternatively, the DVB for mobile environment is in this description referred to as DVB-X. Thus, as used herein, transmission may refer to a broadcast, multicast, or unicast, and data can include but is not limited to, IP protocol-encoded data. Preferably, IP service data received over DVB-T is targeted for mobile reception.

Preferable embodiments of the invention provides a method, a system, a transmitter and a receiver defining a header protection mechanism for DVB MPE (Multi-Protocol Encapsulation) section protocol, which can be used in DVB-T mobile reception. MPE section in this case is referring to a proposal for using MPE section MAC (Media Access Control) bytes 1 - 5 to carry real time information related to time slice bursts. By using header protection mechanism together with high level FEC (Forward Error Correction), there is a way to enhance significantly mobile digital broadband data reception capabilities. Thus the header protection used together with the high level FEC in DVB, provides an advantageous solution for DVB mobile burst data reception. As the high level FEC e.g. the Reed Solomon encoding is used.

According to some preferable embodiments, all packets having an uncorrupted MPE section header may be put into an array for higher level error correction such as FEC. The array has addressable storage locations of mobile digital broadband data for correction of higher level data entity by FEC process.

At the receiver the packet is put into a buffer, a header is identified and checked against errors by using an error detection/correction code, such as e.g. CRC (Cyclic Redundancy Check) for the received header data. If the error detection/correction code (e.g. CRC) indicates substantially correct value or is OK, the address is extracted and the packet including the header is put into the array.

Advantageously, the need for buffering is very small as only the header data needs to be buffered before loading data into the array. The header may be as small as, for example, 12 bytes.

Preferably, by protecting, for example, 12 bytes in MPE section header with error detection/correction code (e.g. CRC), the overall performance of high level FEC is enhanced. One reason for this can be that corrupted packets can be placed into correct position inside a FEC frame. Moreover, the usage of memory on the receiver can be reduced. One reason for this can be that there is no need to buffer whole packet (for example, max.4kB) before the whole packet can be placed into the FEC frame.

Some embodiments of the invention apply time slice data transmission principle in DVB. The DVB transmission system usually provides bandwidth of 10 Mbps or even more. This provides a possibility to significantly reduce the average DVB receiver power consumption by introducing a schema based on time division multiplexing (TDM). The introduced schema is called time slicing. The idea of time slicing is to send data in bursts using significantly higher bandwidth compared to the bandwidth required if the data was transmitted using static bandwidth. Within a burst, time to the beginning of the next burst (delta-t) is indicated. Between the bursts, data of the service is not transmitted, allowing other services to use the bandwidth otherwise allocated for the service. This enables a receiver to stay active only a fragment of the time, while receiving bursts of a requested service. In case a constant lower bitrate is required by the mobile handheld terminal, this may be provides by buffering the received bursts.

So data is transmitted in a burst, typically, short one, by using the great bandwidth of DVB. Some similarities to time division principle counts. The receiver may be shut down between the burst to conserver power. The data in the bursts is downloaded into a buffer and later applied for use. The bursts can be repeated at intervals wherein the time for next bursts is, thus, announced, for example, by the delta-t factor. The high level FEC is in the system to guarantee better uncorrupted packet feed through for the digital broadband system. Advantageously, by using the header protection mechanism in such a way that all packets having substantially correct header may be positioned into the array together with the higher level error correction coding for the array, any possibly corrupted packet can be placed into correct position into the array. Therefore the performance of the higher level error correction can be improved and also the performance of the entire mobile DVB reception/transmission.

Turning now to the structure of mobile digital broadband data transmission in some embodiments of the invention, MPE section is protected by CRC-32 code. The MPE section packet can be up to 4kB long. The MPE section packet includes MPE section header and MPE section payload. The MPE section header contains 12 bytes. Assuming a single byte error to 4kB MPE section packet, probability is only 0,3% (12 / 4096) that this error is in packet header. *Vice versa,* probability of having a single byte error inside MPE section payload is 99.7%. Therefore, it is very advantageous to focus on the header in the reception error correction. The additional benefit is also that based on the header identification, the address/location in the array can be obtained. Therefore, correct header data and the payload is easy to place into the array. No big stuffed data sections remain in the array, since the address of the header focuses the location in the array. This is beneficial because it relieves the work of the FEC process.

Some embodiments of the invention apply the array. A two-dimensional array of addressable storage locations is created and/or accessed by a transmission node. Packets corresponding to data to be transmitted by the node, typically in a particular burst, can be loaded into the two-dimensional array in a column-wise manner. Such packets can be, for example, IP packets. Accordingly, the contents of a loaded packet occupies one or more addressable storage locations of one or more columns. The high level FEC can be computed with respect to each row of the two-dimensional array. Accordingly, the recipient node, after perhaps having receiving indications of the array when receiving, for example, the mobile digital broadband transmission, can create and/or access the two dimensional array corresponding to the array created and/or accessed by the transmitting node.

In the following examples of loading, addressing, and sizing of the two-dimensional arrays is described in some further embodiments of the invention.

The two-dimensional array of the sort noted above could, in accordance with various embodiments of the present invention, be loaded in a number of ways. For example, in embodiments where loading is to be columnar-wise, implementation could be such that only one packet (e.g., IP packet) is loaded per column.

For such embodiments, array row and/or column size could be chosen such that a column would be capable of holding a maximally-sized packet. In the case where a packet or the like loaded into a column was of less than the maximal size, the remaining portion of the column might be filled with "stuff data". As specific example, the remaining portion could be filled with zeros.

The exemplary packet can be maximally sized, so no stuff data is added to the column in which it resides. On the other hand, packet can be of less than the maximal size, and, accordingly, stuff data is added to its column such that the combination of packet and stuff data occupies the entire column. It is also possible that one or more entire columns contain only stuff data. Such columns may be placed before, between, or after the columns containing data, or a combination of these may be used.

As another example of loading in various embodiments where loading is to be columnar-wise, implementation could be such that in the case where a packet did not fully occupy the column into which it was loaded, loading of the column could continue with the next packet to be loaded into the array. Further, in the case where a packet being loaded into a column could not fully fit into that column, those portions which did not fit could be placed in one or more additional column.

Such functionality could be implemented, for example, in such a manner that where a particular packet did not fully fit inside a column, the column would be filled with contents of the packet up to the column's last addressable element (e.g., the element of the column having the highest row-wise address), and the remainder of the packet could be placed in the following column, starting with that columns first addressable element (e.g., the element of the column having the lowest row-wise address).

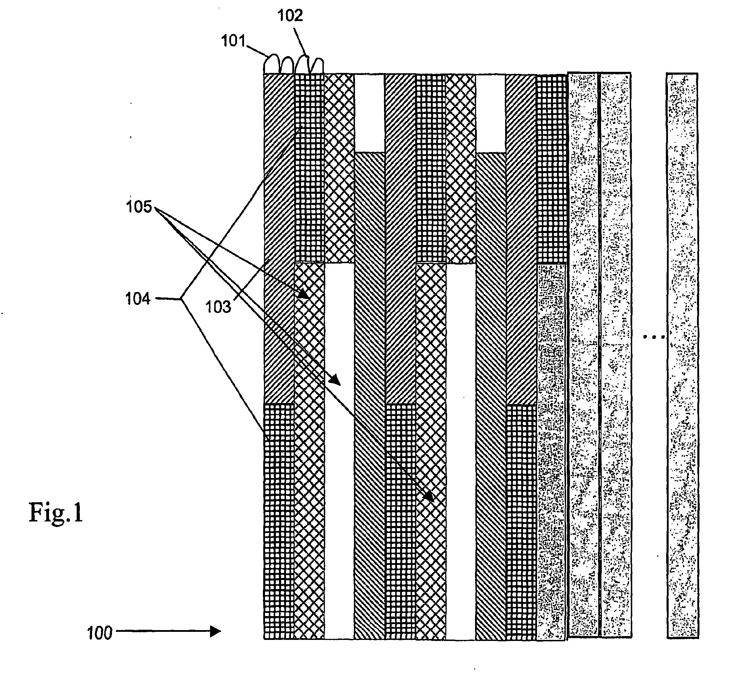

Turning to Fig. 1, the mobile digital broadband transmission such as the DVB-X system with time slicing and high level FEC can be considered to be exemplary applied. The system according to an array (100) of Fig. 1 would have to process 2Mbit FEC frame on receiver side. In fig. 1 exemplary packet 103 does not fully fill column 101 into which it was loaded, the remainder of column 101 is accordingly filled with portions of the packet 104. However, as packet 104 cannot fully fit within the portion of column 101, the remainder of that packet is placed in column 102. Frame address value in the packet header can define a start location for each data (MPE) packet/section (105) within this 2Mbit FEC frame. This start location (address) can be transmitted inside eacd data (MPE) section header (MAC) bytes.

In one embodiment of the invention, only MPE packet payloads are placed into the array according to the address in the MPE packet header and the packet headers are dropped out. This means that the FEC array comprises IP data packets and error detection/correction data bytes.

On the receiver node, there can be analysed correctness of each received MPE section (105) before the receiver node can place this packet into this 2Mbit frame for FEC calculation. The reason for this can be that there should be a certain kind of firmness that received packet start address information has been correctly received. In case packet is placed into wrong position inside 2Mbit FEC frame, it would mean that whole frame shall be corrupted, and after this data is not anymore useful for application.

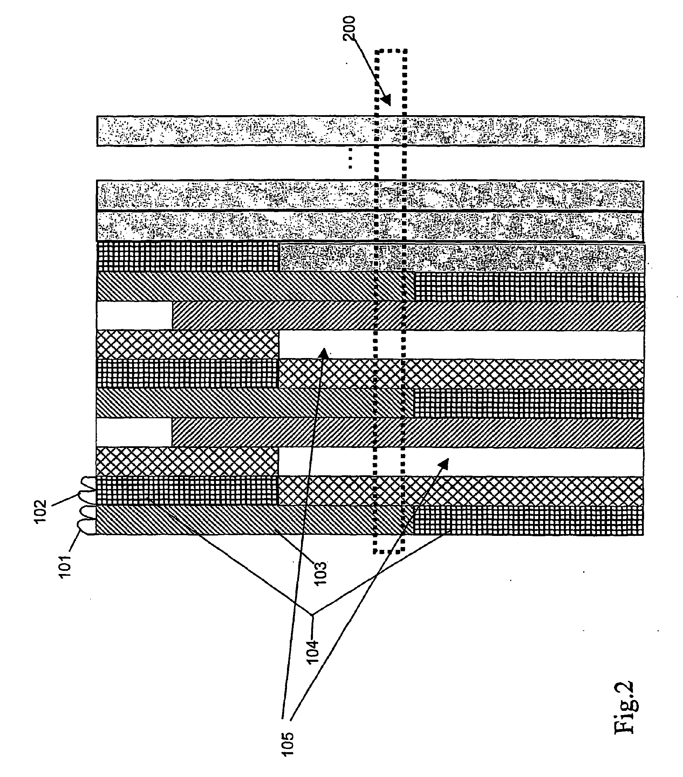

Turning now to Fig. 2, by using an approach based on DVB CRC-32, each section packet (105) (e.g. max. 4kB) should be buffered before placing the section packet (105) into FEC frame. In case there is a single bit error inside the section payload, the packet should still be dropped away because there is a danger that packet start address is corrupted. This can mean that the place for this packet have been left empty and FEC (1024 FEC rows) has to be able to correct the entire packet. This means that a lot of FEC effort/correction capability is lost, because it must repair those empty holes inside FEC frame. This can be only because of 0.3% probability that header is corrupted. It should be noted that in FEC frame, there can be even 1024 separate FEC algorithms. While several packets are missing, it means that also one individual FEC algorithm (i.e. one row) has a lot of holes to be fixed. Thus FEC correction capability for one FEC row (200) is quite easily exceeded. MPE section packet (105), where 1 byte is corrupted, cannot be placed into frame as with CRC-32 one cannot possibly be sure whether the error is in packet start address. So the place for that packet is left empty. The dark block in the array 100 represents data to be corrected by FEC.

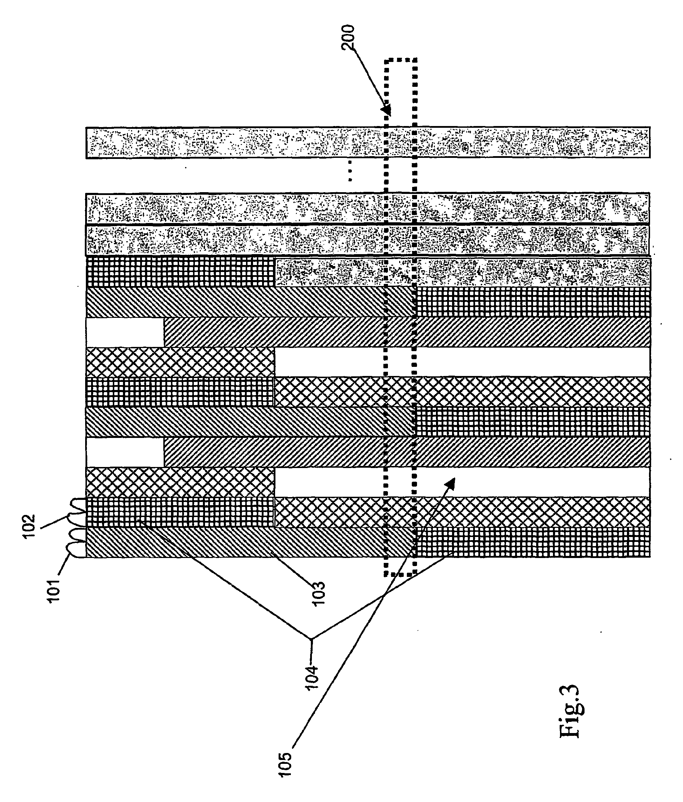

Turning to fig. 3, preferably, in some embodiments to protect MPE section header with additional CRC code, one can analyse and verify correctness of header separately, and place the packet 105 into correct location inside FEC frame. This can take place despite the packet 105 has some errors on the payload. Advantageously, FEC correction capability is much greater as not all the payload bytes of MPE section 105 are corrupted. In addition to that, erroneous bytes are split more or less randomly to different rows (i.e.. the FEC rows 200), which means that correction capability of individual FEC algorithm is already quite difficult to exceed. This can be shown is Fig. 3 as only one data block to be corrected by FEC coincide with the FEC row 200. Thus MPE section packet 105, where, for example, N payload bytes is corrupted, can still be placed into the FEC frame as header is verified to be correct with additional CRC code. Advantageously, FEC correction capability is kept much better for the one FEC row 105 and overall FEC frame performance is, therefore better. The dark block in the array 100 represents data to be corrected by FEC, which is advantageously considerably small.

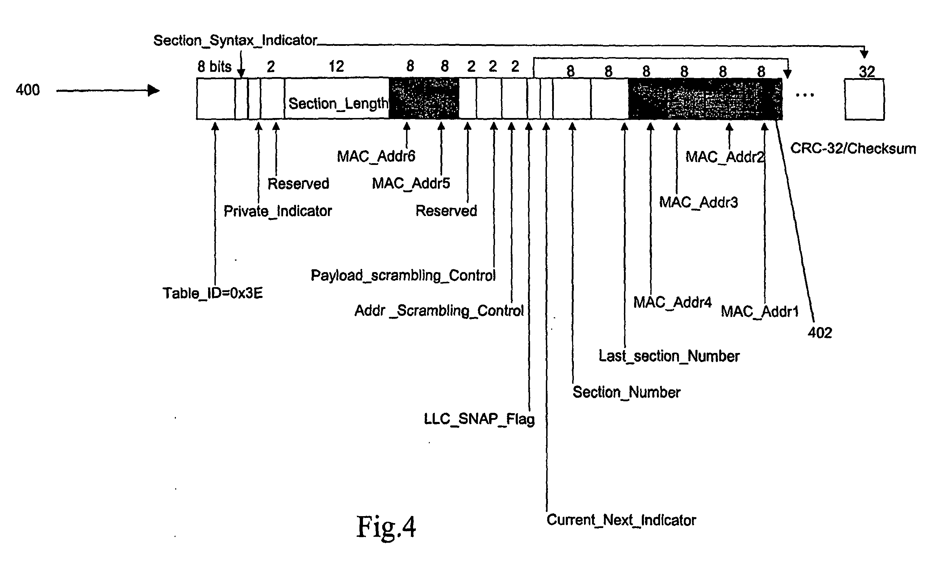

Fig 4 shows how error detection/correction (e.g. CRC) code is added at the end of MPE section header in accordance with further embodiments of the invention. In Fig. 4, there is shown an example of MPE section packet 400 containing the MPE section header and the MPE section payload. The darkened block leave, advantageously, some room for standardization and systems used depending on the applied DVB. In the example of Fig. 4, the CRC code is added at the end of MPE section header.

Some yet further embodiments of Fig. 4 can be based e.g. on CRC-6 based error detection coding, which requires 6 bits from packet header. In these further embodiments, code generator polynomial could be of the following form: x⁶+x+1 (initial remainder value would be to preset all parity bits to zero). Thus, CRC-6 code (402), which is calculated over entire MPE section header (12 bytes) where generator polynomial is based on the equation: x⁶+x+1, and initial remainder value: all zeroes. Further in one embodiment of the invention CRC-8 code can be used. In this case the code generation polynomial would be e.g. x⁸+x²+1 (with the initial remainder preset all zeroes). In this case eight bits are needed from the header.

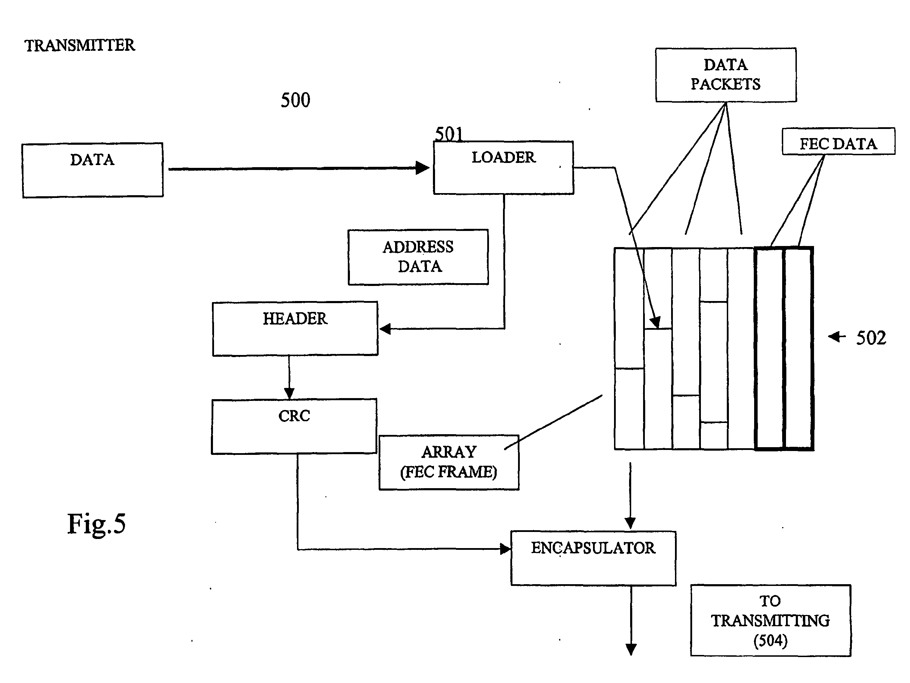

Figure 5 depicts a diagram of exemplary steps involved in data transmission according to embodiments of the invention. In step 500, there is processed encapsulation operations. MPE could be employed in some embodiments of the present invention. As also alluded to above, such MPE might, for example, be DSM-CC MPE. Information regarding MPE can be found, for example, in ETSI document TR 101 202, incorporated herein by reference. The transmitting node could place into MPE DSM-CC sections packets (e.g., IP packets) originally-loaded packets (e.g., IP packets). Next, the DSM-CC sections could, for example, be placed in MPEG-2 TS packets. In the embodiments, a first PID value might be associated with TS packets carrying data corresponding to the, perhaps modified, originally-loaded packets. In step 501, the loader of the transmitting node performs the loading of the packet and the loading of the array. The packet start address is fed from leader to header generation. Also error detection/correction code (e.g. CRC) is added to the MPE section header. The array is created having the error detection/correction code (e.g. CRC) based header correction in step 502. The TS packets might next be transmitted over a link such as, for example, a DVB link, in step 504. The detailed operations can be based on those referred to in the examples of Figs. 1 - 4 with respect to the transmission node. The transmission node such as a headend can perform the steps and operations of the example of Fig. 5.

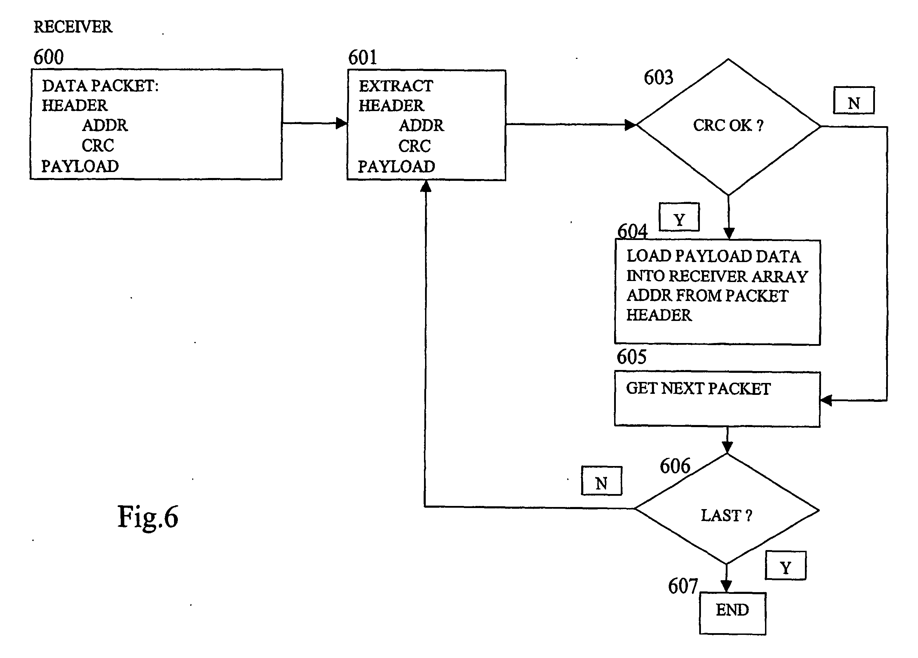

Figure 6 depicts a diagram of exemplary steps involved in data reception according to embodiments of the invention. The reception node can perform the steps referred to in Fig. 6. The data packet including the header and payload is received in step 600. The header includes the address of the packet in the array and also the error correction code such as e.g. CRC-6 code or other error checking code. In step 601 there is performed an extraction for packet reception. For example, the header and the payload is extracted from the data flow of the received data burst of the mobile digital broadband transmission. In step 603, there is being checked whether the error detection/correction code (e.g. CRC) of the header is OK. Preferably, the MPE section header containing the error detection/correction code (e.g. CRC-6) is checked for data errors. Preferably, only the header data portion of the entire section packet is checked. Advantageously, a lot of buffer room can be saved because of the limited size of the header, and the header yet maintaining critical functionality and operation capability of the broadcast data reception. If no substantial errors occur, the data is load into the receiver array in step 604. Preferably, the address for addressing and locating the data into the array is obtained from the header. In step 605, the process goes further to next received section packet. There is being checked whether the processed section packet is the last one in step 606. If not, the process goes back to the extraction step 602 for the respective section packet in question. In step 603, if the error detection/correction code (e.g.CRC) indicates an error or the header is otherwise found corrupted, nothing is placed into the array. Preferably, this happens quite rarely as the header size is small, for example, 12 bytes. This provides further relieves for the higher level correction coding such as the FEC as no big blank data holes remain in the frame for correction. In step 606, if the processed packet is the last one, the process ends in step 607.

In some further embodiments, after the end, there is started to process FEC over the array. When FEC process is ready and data is transferred away from the array, the process can also start over to receive data, process the error detection/correction code (e.g.CRC) over the header, and place packets into the FEC array.

In yet some further embodiments encapsulation takes place in the recipient node. Having received TS packets of the sort, the node could extract the DSM-CC sections carried by these packets. Next, the node could extract from those DSM-CC sections packets carrying data corresponding to header and originally-loaded packets.

Although DSM-CC MPE has been discussed here in the transmission and reception, it will be noted that other MPE techniques could be employed.

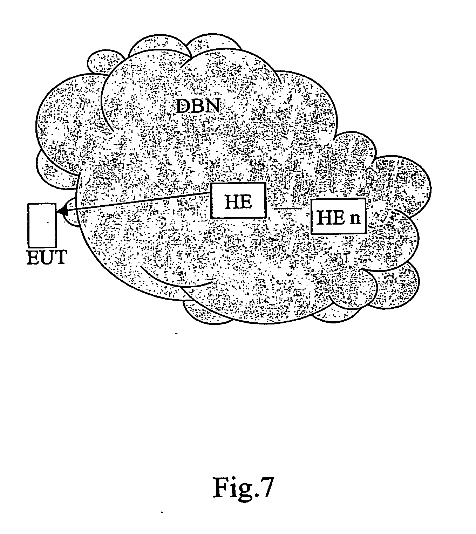

Some embodiments of the invention apply the system of Fig. 7. A End User Terminal (EUT) operates preferably under coverage of a digital broadband network (DBN). EUT can be capable of receiving IP based service that DBN is providing. The DBN is based on DVB, preferably, the DVB-X or DVB-T for mobile environment. The transmission of the DBN contains the array and the MPE section packet with the MPE section header. The transmission can be based on the time slicing. Before transmission data is processed by the DBN. Some examples of the processing is described above in the examples of Figs. 1- 6. Preferably, the DBN transmission is wireless or mobile transmission to the EUT based on DVB-X. Thus, data can be transmitted wirelessly. Headends (HE)s containing IP encapsulators perform the MPE and places IP data into MPEG-TS based data containers. The HE performs also the processing referred to in Figs 1- 6 with respect of the transmission node.

Still referring to the example of Fig. 7, the DVB packets so produced are transmitted over the DVB data link, preferably, mobile or wireless link. The EUT receives digitally broadcast data. The EUT performs the process referred to in Figs. 1 - 6 with respect of the recipient node.

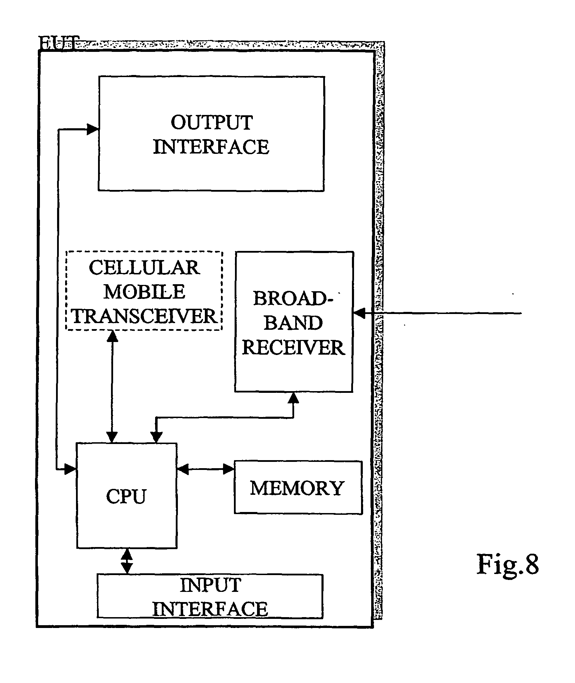

Turning to the example of Figure 8 depicts a functional block diagram of a End User Terminal (EUT) or alternatively referred to as a receiver or a recipient node. The EUT of Fig. 8 may be used in any/all of the above example(s) with respect to the recipient node. The EUT comprises a processing unit CPU, a broadband receiver part or alternatively referred to as a multi-carrier signal receiver part, which can receive, for example, a multi-carrier broadband signal such as DVB-T signal, and a user interface UI. The broadband receiver part and the user interface UI are coupled with the processing unit CPU. The user interface UI comprises a display and a keyboard to enable a user to use the receiver. In addition, the user interface UI comprises a microphone and a speaker for receiving and producing audio signals. The user interface UI may also comprise voice recognition (not shown). Further in an embodiment of the invention the UI can be also a graphical user interface. The processing unit CPU comprises a microprocessor (not shown), memory and possibly software SW (not shown). The software SW can be stored in the memory. The microprocessor controls, on the basis of the software SW, the operation of the receiver. The operations are described in the examples of Figures 1 - 6, and implemented, for example, by the hardware (not shown). Advantageously, the memory of the EUT can be reduced by the appliance of the small header in the burst. Also processing power and the power of the receiver can be saved because the small header requires quite few processing steps being a small data block.

Still referring to Figure 8, alternatively, middleware or software implementation can be applied (not shown). The EUT can be a hand-held device which the user can comfortably carry. Advantageously, EUT can be a cellular mobile phone which comprises the broadcast receiver or multi-carrier signal receiver part for receiving the DVB-T broadcast transmission streams (this is shown in the Fig. 8 by a dash line block which, thus, is an alternative option only). Therefore, the EUT may possibly interact with the service providers.

Some preferable embodied ways for implementing the error detection/correction code (e.g. CRC) code in the header can be considered the hardware, for example shift register implementation. Also lookup table implementation for SW can be done. Implementation of CRC code is a straight forward process.

In yet some further embodiments, CRC-32 is applied for calculation for each MPE section packet but there is no need for buffering any more data of the MPE section payload. The data can be placed into memory after the MPE header is checked. In a rare case if all the MPE packets have to be CRC-32 corrected, then this means that whole 2Mbit FEC frame is correct and there no need to perform the FEC algorithm at all.

It should be noted that the size of FEC frame of 2Mbit, the size of the array, as well as the size of the 1024 MPE section packet and 12 bytes MPE section header are only examples defined in the standardization instance. However, the numerical presentation for those can vary within their respective operations and functions described.

The embodied inventions can save power in the receiver device, which contribute the mobility aspect of the DVB receiver. The performance of the embodiments boosts benefits of the invention such as economy. For example, DVB-T or DVB-X offers an effective and cheap way to distribute data.

Although the description above contains many specifics, these are merely provided to illustrate the invention and should not be constructed as limitations of the invention's scope. Thus it will be apparent for those skilled in the art that various modifications and variations can be made in the system, processed and entities of the present invention without departing from the characteristics of the invention.

## Claims

1. A method for data transmission, comprising:
placing a data segment (103,104,105,400) into a two-dimensional data structure (100) having first directional arrangements (101,102) and second directional arrangements (200), wherein said first directional arrangements are perpendicular to said second directional arrangements, and wherein placement is with respect to said first directional arrangements; **characterised in that**
adding to at least a portion of a header of said data segment a data structure placement indication;
providing a data protection encoding for at least part of the header;
adding said data protection encoding to said data segment; and
transmitting said data segment.

2. A method of claim 1, wherein transmitting said data segment comprises transmitting the contents of each of said first directional arrangements that holds said data segment.

3. A method of claim 1, wherein each data segment is a packet.

4. A method of claim 1, wherein said data protection encoding is added to the at least the portion of the header of said data segment.

5. A method of claim 1, wherein each data segment is a multiprotocol encapsulation section.

6. A method of claim 1, wherein said data segment correspond to data to be transmitted within a single burst.

7. A method of claim 1, wherein said first directional arrangements are columns and said second directional arrangements are rows.

8. A method of claim 1, wherein said first directional arrangements are rows and said second directional arrangements are columns.

9. A method of claim 1, wherein said data structure is an array.

10. A method of claim 1, wherein providing said data protection encoding for at least part of said data segment comprises data protection encoding of said header.

11. A method of claim 10, wherein said data protection encoding comprises cyclic redundancy coding (CRC).

12. A method of claim 1, wherein said data segment comprise data protecting encoding for the said two-dimensional data structure in the second direction.

13. A method for data reception, comprising:
receiving (600) one or more data segments;
identifying (601) a header in each of the one or more received data segments; **characterised in that**
identifying (603) a data protection encoding in each header of said data segments;
checking (603) each of said headers for errors based on said data protection encoding; and wherein said header is free from errors;
placing (604) the received data segment associated with the error-free header into a two-dimensional data structure having first directional arrangements and second directional arrangements, wherein said first directional arrangements are perpendicular to said second directional arrangements, and wherein placement is in compliance with received data structure placement indications in the received header.

14. A system for data transfer comprising:
at least one transmitting node for transmitting one or more data segments; **characterised in that**
means at the transmitting node for providing a data protection encoding for at least a portion of the each of the one or more data segments;
means at the transmitting node for adding the said data protection encoding to each of said one or more data segments;
at least one recipient node for receiving said data segments;
means at the recipient node for identifying the said data protection encoding in each of the received one or more data segments; means at the transmitting node for placing the data segments into a two-dimensional data structure having first directional arrangements and second directional arrangements, wherein said first directional arrangements are perpendicular to said second directional arrangements, and wherein placement is with respect to said first directional arrangements;
means at the transmitting node for adding to the said one or more data segments a data structure placement indication;
means at the recipient node for identifying a header in the said received data segment;
means at the recipient node for checking said header for errors; and
means at the recipient node for placing the received data segment associated with the error-free header into a two-dimensional data structure having first directional arrangements and second directional arrangements, wherein said first directional arrangements are perpendicular to said second directional arrangements, and wherein placement is in compliance with received data structure placement indications in the received header.

15. A receiver (EUT), comprising:
means for receiving one or more data segments;
means for identifying at least a header in at least one of the one or more received data segments; **characterised in that**
means for identifying a data protection encoding in at least one header of said data segments;
means for checking at least a portion of at least the header for errors based on said data protection encoding; and
wherein said header is free from errors;
means for placing the received data segment associated with the error-free header into a two-dimensional data structure having first directional arrangements and second directional arrangements, wherein said first directional arrangements are perpendicular to said second directional arrangements, and wherein placement is in compliance with received data structure placement indications in the received header.

16. A transmitter (HE), comprising
means for placing one or more data segments into a two-dimensional data structure having first directional arrangements and second directional arrangements, wherein said first directional arrangements are perpendicular to said second directional arrangements, and wherein placement is with respect to said first directional arrangements; **characterised in that**
means for adding to at least a portion of a header of said one or more data segments a data structure placement indication;
means for providing a data protection encoding for at least part of the header of each of said data segment;
means for adding said data protection encoding to each of said data segment; and
means for transmitting said one or more data segments.

17. A computer program comprising computer program code means adapted to perform the steps of the method of claim 1 or 13 when said program is run on a computer.

18. A computer program as claimed in claim 17 embodied on a computer readable medium.

19. A computer readable medium comprising program code adapted to carry out the method of claim 1 or 13 when run on a computer.

20. A carrier medium, for example electromagnetic signal, carrying the computer executable program of claim 17.

## Patentansprüche

1. Verfahren zur Datenübertragung, umfassend:
Anordnen eines Datensegments (103, 104, 105, 400) in einer zweidimensionalen Datenstruktur (100) mit ersten gerichteten Einteilungen (101, 102) und zweiten gerichteten Einteilungen (200), wobei
die ersten gerichteten Einteilungen rechtwinklig zu den zweiten gerichteten Einteilungen sind, und wobei
die Anordnung sich auf die ersten gerichteten Einteilungen bezieht;
**gekennzeichnet durch**
Hinzufügen einer Datenstruktur-Anordnungsangabe zu mindestens einem Teil eines Dateikopfes des Datensegments;
Bereitstellen einer Datenschutz-Kodierung für mindestens einen Teil des Dateikopfes;
Hinzufügen der Datenschutz-Kodierung zu dem Datensegment; und Übertragen des Datensegments.

2. Verfahren gemäß Anspruch 1, wobei das Übertragen des Datensegments ein Übertragen des Inhalts jeder ersten gerichteten Einteilung umfasst, die das Datensegment hält.

3. Verfahren gemäß Anspruch 1, wobei jedes Datensegment ein Paket ist.

4. Verfahren gemäß Anspruch 1, wobei die Datenschutz-Kodierung zu dem mindestens einen Teil des Dateikopfes des Datensegments hinzugefügt wird.

5. Verfahren gemäß Anspruch 1, wobei jedes Datensegment ein Multiprotokoll-Kapselungsabschnitt ist.

6. Verfahren gemäß Anspruch 1, wobei das Datensegment Daten entspricht, die innerhalb eines einzelnen Bursts zu übertragen sind.

7. Verfahren gemäß Anspruch 1, wobei die ersten gerichteten Einteilungen Spalten sind, und die zweiten gerichteten Einteilungen Zeilen sind.

8. Verfahren gemäß Anspruch 1, wobei die ersten gerichteten Einteilungen Zeilen sind, und die zweiten gerichteten Einteilungen Spalten sind.

9. Verfahren gemäß Anspruch 1, wobei die Datenstruktur ein Feld ist.

10. Verfahren gemäß Anspruch 1, wobei das Bereitstellen der Datenschutz-Kodierung für mindestens einen Teil des Datensegments eine Datenschutz-Kodierung des Dateikopfes umfasst.

11. Verfahren gemäß Anspruch 10, wobei die Datenschutz-Kodierung eine zyklische Redundanzkodierung (CRC) umfasst.

12. Verfahren gemäß Anspruch 1, wobei das Datensegment eine Datenschutz-Kodierung für die zweidimensionale Datenstruktur in der zweiten Richtung umfasst.

13. Verfahren zum Datenempfang, umfassend:
Empfangen (600) von einem oder mehreren Datensegmenten;
Identifizieren (601) eines Dateikopfes in jedem der einen oder mehreren Dateisegmente;
**gekennzeichnet durch**:
Identifizieren (603) einer Datenschutz-Kodierung in jedem Dateikopf der Datensegmente;
Überprüfen (603) jedes Dateikopfes auf Fehler auf der Grundlage der Datenschutz-Kodierung; und wobei der Dateikopf frei von Fehlern ist; Anordnen (604) des empfangenen Datensegments, das mit dem fehlerfreien Dateikopf verknüpft ist, in einer zweidimensionale Datenstruktur mit ersten gerichteten Einteilungen und zweiten gerichteten Einteilungen, wobei
die ersten gerichteten Einteilungen rechtwinklig zu den zweiten gerichteten Einteilungen sind, und wobei
das Anordnen in Übereinstimmung mit den empfangenen Datenstruktur-Anordnungsangaben im empfangenen Dateikopf ausgeführt wird.

14. System zur Datenübertragung, umfassend:
mindestens einen Übertragungsknoten zum Übertragen von einem oder mehreren Datensegmenten, **gekennzeichnet durch**:
Mittel am Übertragungsknoten zum Bereitstellen einer Datenschutz-Kodierung für mindestens einen Teil jedes der einen oder mehreren Datensegmente;
Mittel am Übertragungsknoten zum Hinzufügen der Datenschutz-Kodierung zu jedem der ein oder mehreren Datensegmente;
mindestens einen Empfängerknoten zum Empfangen der Datensegmente;
Mittel am Empfangsknoten zum Identifizieren der Datenschutz-Kodierung in jedem der empfangenen ein oder mehreren Datensegmente;
Mittel am Übertragungsknoten zum Anordnen der Datensegmente in einer zweidimensionalen Datenstruktur mit ersten gerichteten Einteilungen und zweiten gerichteten Einteilungen, wobei
die ersten gerichteten Einteilungen rechtwinklig zu den zweiten gerichteten Einteilungen sind, und wobei
die Anordnung sich auf die ersten gerichteten Einteilungen bezieht;
Mittel am Übertragungsknoten zum Hinzufügen einer Datenstruktur-Anordnungsangabe zu den ein oder mehreren Datensegmenten;
Mittel am Empfangsknoten zum Identifizieren eines Dateikopfes im empfangenen Datensegment;
Mittel am Empfangsknoten zum Überprüfen des Dateikopfes auf Fehler; und
Mittel am Empfangsknoten zum Anordnen der empfangenen Datensegmente, die mit dem fehlerfreien Dateikopf verknüpft sind, in einer zweidimensionalen
Datenstruktur mit ersten gerichteten Einteilungen und zweiten gerichteten Einteilungen, wobei
die ersten gerichteten Einteilungen rechtwinklig zu den zweiten gerichteten Einteilungen sind, und wobei
die Anordnung mit den empfangenen Datenstruktur-Anordnungsangaben im empfangenen Dateikopf übereinstimmt.

15. Empfänger (EUT), umfassend:
Mittel zum Empfangen von einem oder mehreren Datensegmenten;
Mittel zum Identifizieren von mindestens einem Dateikopf in mindestens einem der ein oder mehreren empfangenen Datensegmente,
**gekennzeichnet durch**:
Mittel zum Identifizieren einer Datenschutz-Kodierung in mindestens einem Dateikopf der Datensegmente;
Mittel zum Überprüfen mindestens eines Teils von mindestens dem Dateikopf auf Fehler auf der Grundlage der Datenschutz-Kodierung; und wobei der Dateikopf frei von Fehlern ist;
Mittel zum Anordnen des empfangenen Datensegments, das mit dem fehlerfreien Dateikopf verknüpft ist, in einer zweidimensionalen Datenstruktur mit ersten gerichteten Einteilungen und zweiten gerichteten Einteilungen, wobei
die ersten gerichteten Einteilungen rechtwinklig zu den zweiten gerichteten Einteilungen sind, und wobei
die Anordnung mit den empfangenen Datenstruktur-Anordnungsangaben im empfangenen Dateikopf übereinstimmt.

16. Sender (HE), umfassend:
Mittel zum Anordnen von einem oder mehreren Datensegmenten in einer zweidimensionalen Datenstruktur mit ersten gerichteten Einteilungen und zweiten gerichteten Einteilungen, wobei
die ersten gerichteten Einteilungen rechtwinklig zu den zweiten gerichteten Einteilungen sind und wobei
die Anordnung sich auf die ersten gerichteten Einteilungen bezieht;
**gekennzeichnet durch**:
Mittel zum Hinzufügen einer Datenstruktur-Anordnungsangabe zu mindestens einem Teil eines Dateikopfes von einem oder mehreren Dateisegmenten;
Mittel zum Bereitstellen einer Datenschutz-Kodierung für mindestens einen Teil des Dateikopfes von jedem Datensegment;
Mittel zum Hinzufügen der Datenschutz-Kodierung zu jedem Datensegment; und
Mittel zum Übertragen des einen oder der mehreren Datensegmente.

17. Computerprogramm, das Computer-Programm-Code-Mittel umfasst, die angepasst sind die Schritte des Verfahrens von Anspruch 1 oder 13 auszuführen, wenn das Programm auf einem Computer ausgeführt wird.

18. Computerprogramm gemäß Anspruch 17, das auf einem computerlesbaren Medium ausgeführt ist.

19. Computerlesbares Medium, das einen Programmcode aufweist, der angepasst ist, das Verfahren von Anspruch 1 oder 13 auszuführen, wenn es auf einem Computer ausgeführt wird.

20. Trägermedium, zum Beispiel ein elektromagnetisches Signal, das das computerausführbare Programm von Anspruch 17 trägt.

## Revendications

1. Procédé pour l'émission de données, comprenant :
placer un segment de données (103, 104, 105 et 400) dans une structure de données à deux dimensions (100) ayant des premières dispositions directionnelles (101 et 102) et des deuxièmes dispositions directionnelles (200), dans laquelle lesdites premières dispositions directionnelles sont perpendiculaires auxdites deuxièmes dispositions directionnelles, et dans laquelle la mise en place est par rapport auxdites premières dispositions directionnelles ;
**caractérisé par**
ajouter à au moins une partie d'une entête dudit segment de données une indication de mise en place de structure de données ;
prévoir un encodage de protection de données pour au moins une partie de l'entête ;
ajouter ledit encodage de protection de données audit segment de données ; et
émettre ledit segment de donnée.

2. Procédé selon la revendication 1, dans lequel l'émission dudit segment de données comprend l'émission des contenus de chacune desdites premières dispositions directionnelles qui contient ledit segment de données.

3. Procédé selon la revendication 1, dans lequel chaque segment de données est un paquet.

4. Procédé selon la revendication 1, dans lequel ledit encodage de protection de données est ajouté à la au moins la partie de l'entête dudit segment de données.

5. Procédé selon la revendication 1, dans lequel chaque segment de données est une section d'encapsulation multiprotocole.

6. Procédé selon la revendication 1, dans lequel ledit segment de données correspond aux données à émettre en une seule rafale.

7. Procédé selon la revendication 1, dans lequel lesdites premières dispositions directionnelles sont des colonnes et lesdites deuxièmes dispositions directionnelles sont des rangées.

8. Procédé selon la revendication 1, dans lequel lesdites premières dispositions directionnelles sont des rangées et lesdites deuxièmes dispositions directionnelles sont des colonnes.

9. Procédé selon la revendication 1, dans lequel ladite structure de données est un ensemble.

10. Procédé selon la revendication 1, dans lequel la prévision dudit encodage de protection de données pour au moins une partie dudit segment de données comprend l'encodage de protection de données de ladite entête.

11. Procédé selon la revendication 10, dans lequel ledit encodage de protection de données comprend un codage cyclique de redondance (CRC).

12. Procédé selon la revendication 1, dans lequel ledit segment de données comprend un encodage de protection de données pour ladite structure de données à deux dimensions dans la deuxième direction.

13. Procédé pour la réception de données, comprenant :
recevoir (600) un ou plusieurs segments de données ;
identifier (601) une entête dans chacun du ou des segments de données reçus ; **caractérisé par**
identifier (603) un codage de protection de données dans chaque entête desdits signaux de données ;
contrôler (603) les erreurs dans chacune desdites entêtes en se basant sur ledit encodage de protection de données ; et dans lequel ladite entête est sans erreur ;
placer (604) le segment de données reçu associé à l'entête sans erreur dans une structure de données à deux dimensions ayant des premières dispositions directionnelles et des deuxièmes dispositions directionnelles dans laquelle lesdites premières dispositions directionnelles sont perpendiculaires auxdites deuxièmes dispositions directionnelles, et dans laquelle la mise en place est en conformité avec les indications de mise en place de la structure de données reçue dans l'entête reçue.

14. Système pour le transfert de données comprenant :
au moins un noeud d'émission pour émettre un ou plusieurs segments de données ; **caractérisé par**
un moyen au noeud d'émission pour prévoir un encodage de données pour au moins une partie de chacun de l'un ou plusieurs segments de données ;
un moyen au noeud d'émission pour ajouter ledit encodage de protection de données à chacun desdits un ou plusieurs segments de données ;
au moins un noeud de réception pour recevoir lesdits segments de données ;
un moyen au noeud de réception pour identifier ledit encodage de protection de données dans chacun de l'un ou plusieurs segments de données reçus ; un moyen au noeud d'émission pour placer les segments de données dans une structure de données à deux dimensions ayant des premières dispositions directionnelles et des deuxièmes dispositions directionnelles, dans laquelle lesdites premières dispositions directionnelles sont perpendiculaires auxdites deuxièmes dispositions directionnelles, et dans laquelle la mise en place est par rapport aux premières dispositions directionnelles ;
un moyen au noeud d'émission pour ajouter audit un ou plusieurs segments de données une indication de placement de structure de données ;
un moyen au noeud de réception pour identifier une entête dans ledit segment de données reçu
un moyen au noeud de réception pour contrôler les erreurs dans l'entête ; et
un moyen au noeud de réception pour placer le segment de données reçu associé à l'entête sans erreur dans une structure de données à deux dimensions ayant des premières dispositions directionnelles et des deuxièmes dispositions directionnelles, dans laquelle lesdites premières dispositions directionnelles sont perpendiculaires auxdites deuxièmes dispositions directionnelles, et dans laquelle la mise en place est en conformité avec les indications de mise en place de la structure de données reçue dans l'entête reçue.

15. Récepteur (EUT), comprenant :
un moyen pour recevoir un ou plusieurs segments de données ;
un moyen pour identifier au moins une entête dans au moins un du ou des segments des données reçus ; **caractérisé par**
un moyen pour identifier un encodage de protection de données dans au moins une entête desdits segments de données ;
un moyen pour contrôler les erreurs dans au moins une partie d'au moins l'entête, en se basant sur ledit encodage de protection de données ; et
dans lequel ladite entête est sans erreur ;
un moyen pour placer le segment de données reçu associé à l'entête sans erreur dans une structure de données à deux dimensions ayant des premières dispositions directionnelles et des deuxièmes dispositions directionnelles dans laquelle lesdites premières dispositions directionnelles sont perpendiculaires auxdites deuxièmes dispositions directionnelles, et dans laquelle la mise en place est en conformité avec les indications de mise en place de la structure de données reçue dans l'entête reçue.

16. Emetteur-récepteur (HE), comprenant
un moyen pour placer un ou plusieurs segments de données dans une structure de données à deux dimensions ayant des premières dispositions directionnelles et des deuxièmes dispositions directionnelles, dans laquelle lesdites premières dispositions directionnelles sont perpendiculaires auxdites deuxièmes dispositions directionnelles, et dans laquelle la mise en place est par rapport aux premières dispositions directionnelles ;
**caractérisé par**
un moyen pour ajouter à au moins une partie d'entête desdits un ou plusieurs segments de données une indication de mise en place de structure de données ;
un moyen pour prévoir un encodage de protection de données pour au moins une partie de l'entête de chacun desdits segments de données ;
un moyen pour ajouter ledit encodage de protection de données à chacun desdits segments de données ; et
un moyen pour émettre lesdits un ou plusieurs segments de données.

17. Programme informatique comprenant un moyen de code de programme informatique adapté, pour exécuter les étapes du procédé de la revendication 1 ou 13 quand ledit programme est utilisé sur un ordinateur.

18. Programme informatique selon la revendication 17, réalisé sur un support lisible de l'ordinateur.

19. Support lisible d'ordinateur comprenant un code de programme adapté pour mener à terme le procédé de la revendication 1 ou 13, quand il est utilisé sur un ordinateur.

20. Support porteur, par exemple un signal électromagnétique, transportant le programme exécutable de l'ordinateur de la revendication 17.
